(19) **Europäisches Patentamt / European Patent Office / Office européen des brevets**

(11) **EP 3 327 281 A1**

(12) # EUROPEAN PATENT APPLICATION
published in accordance with Art. 153(4) EPC

(43) Date of publication:
**30.05.2018 Bulletin 2018/22**

(21) Application number: **15903049.3**

(22) Date of filing: **03.09.2015**

(51) Int Cl.:
**F03D /** (2006.01)

(86) International application number:
**PCT/JP2015/075131**

(87) International publication number:
**WO 2017/037930 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Sekisui Plastics Co., Ltd.**
**Osaka-shi**
**Osaka 530-8565 (JP)**

(72) Inventors:
• **NAKAMURA, Masaaki**
**Tenri-shi**
**Nara 632-8505 (JP)**
• **MICHIHATA, Satomi**
**Tenri-shi**
**Nara 632-8505 (JP)**

(74) Representative: **Müller-Boré & Partner**
**Patentanwälte PartG mbB**
**Friedenheimer Brücke 21**
**80639 München (DE)**

(54) **WINDMILL BLADE**

(57) Provided is a windmill blade, comprising a core material formed of an acrylic resin expanded article and an outer skin covering the core material, in which the outer skin is formed of a fiber-reinforced resin material including a carbon fiber and a resin, and the acrylic resin expanded article has a specified bending modulus.

Figure 1

EP 3 327 281 A1

**Description**

TECHNICAL FIELD

The present invention relates to a windmill blade.

BACKGROUND TECHNOLOGY

In a windmill utilized in wind power generation or the like, a plurality of blades (hereinafter, also referred to as "windmill blade") have hitherto been attached to a rotating shaft.
In the windmill, in order to render rotation by wind power effective, it is desirable that blades are lightweight.
For this reason, hollow blades have hitherto been used in the windmill.
The windmill blade is, however, liable to be deficient in a strength, when it is a hollow body formed of only an outer skin.
In view of such a point, for example, in Patent Document 1, there has been proposed a windmill blade in which an outer skin is formed of a fiber-reinforced resin material excellent in the strength.

PRIOR ART DOCUMENTS

Patent Documents

Patent Document 1: Japanese Unexamined Patent Application, First Publication No. 2002-137307

SUMMARY OF THE INVENTION

PROBLEM TO BE SOLVED BY THE INVENTION

In a windmill blade, usually, bending or distortion is generated by wind power.
In a hollow windmill blade, when a portion which is smaller in the thickness as compared with the thickness of the circumference thereof is formed in a part of an outer skin, stress of bending or distortion is easily concentrated on such a portion.
In the windmill blade, such stress concentration becomes easy to occur particularly when the outer skin is thinned in order to achieve weight reduction.
For this reason, there is a possibility that this kind of windmill blade may be damaged when it is exposed to stiff wind.
That is, the conventional windmill blade has a problem that it is difficult to achieve both the strength and lightweight property.
The present invention has an object to solve such problems, and has an object to provide a windmill blade excellent in the strength and lightweight property.

MEANS FOR SOLVING THE PROBLEM

In order to solve the above-described problems, the present invention provides a windmill blade, including a core material and an outer skin covering the core material, wherein the outer skin is formed of a fiber-reinforced resin material including a carbon fiber and a resin, at least a part of the core material is formed of an acrylic resin expanded article, and the acrylic resin expanded article has a bending modulus of 5 MPa or more.

EFFECTS OF INVENTION

The windmill blade of the present invention is provided with a core material formed of a resin expanded article.
Additionally, in the present invention, the core material is formed of an acrylic resin expanded article excellent in strength.
Thus, according to the present invention, the windmill blade can be made to exert excellent strength and lightweight property.

BRIEF DESCRIPTION OF THE DRAWINGS

Fig. 1 is a schematic perspective of a windmill blade according to one embodiment of the present invention.

Fig. 2a is a front view of the windmill blade shown in Fig. 1.

Fig. 2b is a side view of the windmill blade shown in Fig. 1.

Fig. 3a is a cross-sectional arrow view along line I-I shown in Fig. 2a.

Fig. 3b is a cross-sectional arrow view along line II-II shown in Fig. 2a.

Fig. 4 is a cross-sectional arrow view along line III-III shown in Fig. 2b.

Fig. 5 is a main part enlarged cross-sectional view showing appearance of an outer skin and a reinforcing material in the vicinity of a D portion of Fig. 3a.

Fig. 6 is a schematic perspective for illustrating the state during manufacturing where a reinforcing material is arranged on an inner wall surface of an outer skin in the halved state.

Fig. 7 is a schematic perspective for illustrating the state during manufacturing where a beam core is arranged on a reinforcing material.

Fig. 8 is a schematic perspective for illustrating the state during manufacturing where a beam outer skin is formed of a fiber-reinforced resin material on a surface of a beam core.

Fig. 9 is a schematic perspective for illustrating the state during manufacturing where an acrylic resin expanded article forming a core material together with a beam body is arranged on left and right sides of a beam body.

Fig. 10 is a schematic perspective showing the state before preparation of a windmill blade by bonding together outer skins in the halved state.

Fig. 11 is a cross-sectional view of a windmill blade according to another embodiment.

Fig. 12 is a cross-sectional view of the windmill blade according to another embodiment.

BEST MODE FOR CARRYING OUT THE INVENTION

A windmill blade according to an embodiment of the present invention will be illustrated below with reference to the drawings.

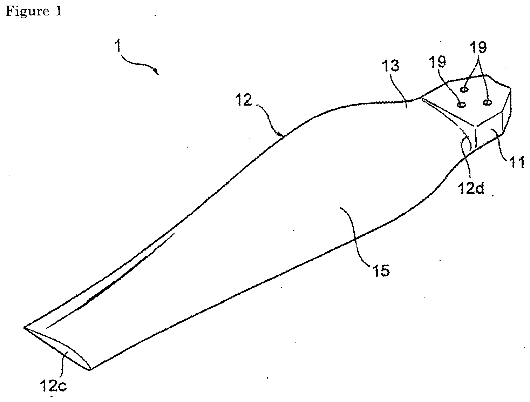

Fig. 1 is a schematic perspective of a windmill blade according to an embodiment of the present invention.

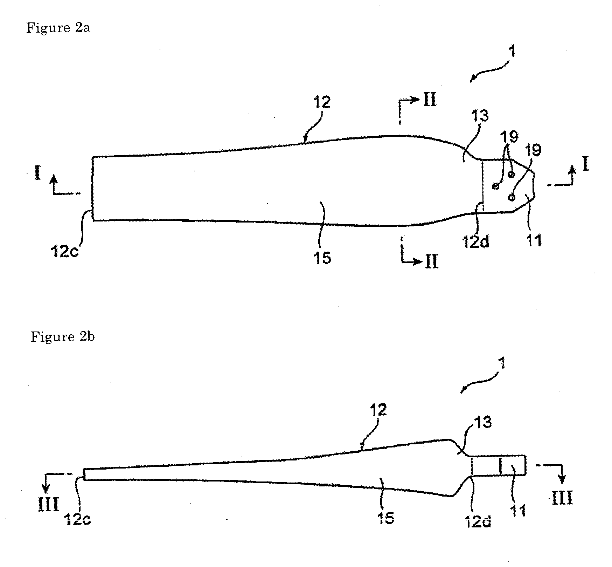

Fig. 2a is a front view of the windmill blade shown in Fig. 1, and Fig. 2b is a side view thereof.

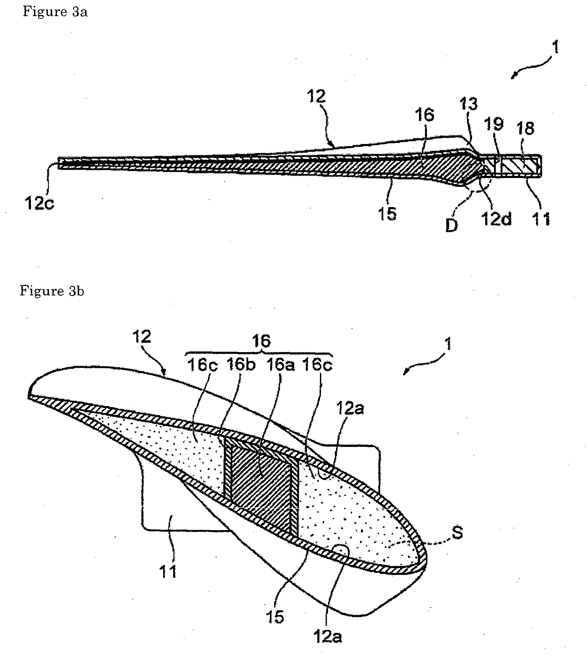

Fig. 3a is a cross-sectional arrow view along with line I-I shown in Fig. 2a, and Fig. 3b is a cross-sectional arrow view along with line II-II shown in Fig. 2a.

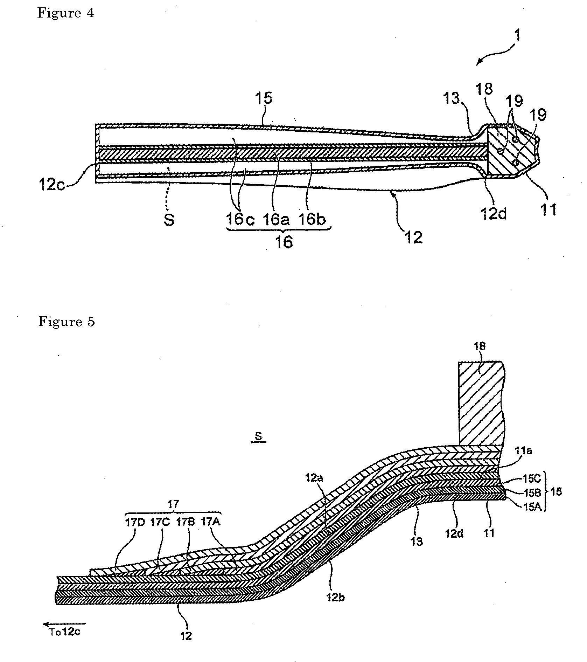

Fig. 4 is a cross-sectional arrow view along with line III-III shown in Fig. 2b.

Fig. 5 is a main part enlarged cross-sectional view of an outer skin and a reinforcing material in the vicinity of a D portion of Fig. 3a.

1. Overall Structure of Windmill Blade

A windmill blade 1 according to the present embodiment is a blade which is attached to a rotating shaft of the windmill in a plural manner, and as shown in Fig. 1, it is provided with an attaching portion 11 which is attached to the rotating shaft of the windmill, and a whip portion 12 extending from the attaching portion 11.

The whip portion 12 is a plate-like body extending long in the above-described extending direction, and has a streamlined cross-sectional shape which is pointed on a one side in a width direction of the relevant whip portion 12.

The whip portion 12 has a shape in which twist is added to the above-described plate-like body, and has a shape in which the above-described plate-like body is twisted while maintaining a streamlined cross-sectional shape from a tip 12c to a proximal end 12d thereof (see, for example, Fig. 3b).

Additionally, as shown in Fig. 2a and Fig. 2b, in the whip portion 12, the thickness is increased from a center in a longitudinal direction thereof toward the proximal end 12d, and is formed so that, in the vicinity of the attaching portion 11, as advancing to an attaching portion 11 side, the width and the thickness of the whip portion 12 are decreased.

That is, in the whip portion 12 of the present embodiment, there is formed a throttle portion 13 which is throttled so that as advancing to the attaching portion 11 side, the width and the thickness of the whip portion 12 are decreased.

In the attaching portion 11, three through holes 19, 19, 19 for attachment to the rotating shaft of the windmill are formed.

As shown in Fig. 3a, Fig. 3b, and Fig. 4, the windmill blade 1 is provided with an outer skin 15.

At the whip portion 12 and the attaching portion 11, an internal space S is formed inside the outer skin 15, and an internal space of the whip portion 12 and an internal space of the attaching portion 11 are connected to form the above-described internal space S.

The outer skin 15 is formed of a fiber-reinforced resin material.

The fiber-reinforced resin material is a sheet including a resin and a fiber having a tensile strength at break higher than that of the resin (reinforcing fiber), in which a substrate sheet composed of the fiber is impregnated with the above-described resin.

Herein, the outer skin 15 may be formed of a plurality of fiber-reinforced resin materials, and in that case, it is preferable that at least one or more fiber-reinforced resin materials are such that a fiber for reinforcement is a carbon fiber, and it is preferable that all fibers for reinforcement are carbon fibers. Such configuration allows the windmill blade 1 to exert excellent strength and lightweight property.

In addition, the fiber-reinforced resin material may contain a plurality of kinds of fibers for reinforcement.

Additionally, when a plurality of fiber-reinforced resin materials are overlapped to make the outer skin 15 have a laminated structure, a fiber-reinforced resin material containing a carbon fiber as a fiber for reinforcement and a fiber-reinforced resin material in which a fiber for reinforcement is a fiber other than the carbon fiber may be overlapped.

Examples of this fiber other than the carbon fiber include a glass fiber, an aramid fiber, a polyvinyl alcohol fiber, a vinyl chloride fiber, an acrylic fiber, a polyester fiber, a polyurethane fiber, a polyethylene fiber, a polypropylene fiber, a polystyrene fiber, an acetate fiber, and the like.

A resin to be impregnated into the reinforcing fiber (matrix resin) may be either a thermoplastic resin or a thermosetting resin.

Examples of the thermoplastic resin include thermoplastic resins such as a polyethylene resin, a polypropylene resin, a polystyrene resin, a polybutadiene resin, a styrene-butadiene resin, a polyacetal resin, a polyamide resin, and a polycarbonate resin.

Examples of the thermosetting resin include an unsaturated polyester resin, an acrylic resin, a vinyl ester resin, an epoxy resin, a urethane resin, a phenol resin, a silicone resin, and the like.

In addition, in the present embodiment, as one example thereof, the thermosetting resin is used.

A core body 18 is arranged in the internal space S surrounded with the outer skin 15 of the attaching portion 11, and the core body 18 is composed of a fiber-reinforce resin material having a tensile strength higher than that of a fiber-reinforced resin material of the outer skin 15.

That is, the fiber-reinforced resin material constituting the core body 18 is any of such that the fiber-reinforced resin material is high in mass ratio of the fiber, that the fiber-reinforced resin material is high in tensile strength of the fiber itself, or that the fiber-reinforced resin material is high in tensile strength of a synthetic resin which has been impregnated into the fiber, as compared with the fiber-reinforced resin material constituting the outer skin 15.

In this way, by arranging the core body 18 composed of a fiber-reinforced resin material having a tensile strength higher than that of a fiber-reinforced resin material of the outer skin, the attaching strength of the attaching portion 11 can be enhanced.

2. Structure of Core Material

In the internal space S of the outer skin 15 at the above-described whip portion 12, a core material 16 is arranged.

The core material 16 is provided with a bar-like beam body extending from the attaching portion 11 to a tip of the above-described whip portion through a central portion in a width direction of the whip portion 12, and a bar-like expanded article disposed on both sides of the beam body.

That is, the core material 16 of the present embodiment is such that three bar-like bodies come into contact with each other side by side.

The above-described beam body is provided with a beam core 16a which is one size thinner than the relevant beam body, and a beam outer skin 16b covering the beam core 16a.

More specifically, the outer skin 15 has two inner wall surfaces 12a, 12a opposing to a thickness direction of the whip portion 12.

The above-described beam body comes into contact with both inner wall surfaces 12a, 12a, and connects the inner wall surfaces 12a, 12a to each other (see Fig. 3b).

The above-described beam body is arranged along a longitudinal direction of the whip portion 12, from a tip 12c of the whip portion 12 to a proximal end 12d of the whip portion 12 (see Fig. 4).

The above-described expanded article 16c constituting the core material 16 together with the beam body is filled into a space other than the beam body of the above-described internal space S, and is adhered to the inner wall surfaces 12a, 12a of the outer skin 15.

The above-described core body 18 of the attaching portion 11 abuts against the beam body. The above-described core body 18 and the beam body are continuously arranged along a longitudinal direction of the blade 1.

Herein, the above-described beam core 16a is formed of a resin expanded article, and a fiber-reinforced resin material which is the same as or different from that of the outer skin 15 of the blade 1 is used for forming the above-described beam outer skin 16b.

It is preferable that the beam outer skin 16b is formed of a fiber-reinforced resin material having a density (mass ratio) of the fiber higher than that of the outer skin 15.

As an expanded resin constituting the beam core 16a, a hard expanded article is preferable, and examples of the hard expanded article include an acrylic resin expanded article, a polyurethane resin expanded article, a polystyrene resin expanded article, a phenol resin expanded article, a polyvinyl chloride resin expanded article, and the like.

The beam core 16a of the present embodiment is formed of an acrylic resin expanded article.

The above-described expanded article 16c forming the core material 16 together with the above-described beam body is an acrylic resin expanded article.

That is, in the core material 16 of the present embodiment, a part thereof is formed of a fiber-reinforced resin material (beam outer skin), and the remainder is formed of an acrylic resin expanded article.

The above-described expanded article 16c and the above-described beam core 16a come into contact with an inner wall surface of the outer skin 15, as shown in Fig. 3b.

The above-described beam core 16a and the above-described expanded article 16c have a bending modulus of 5 MPa or more.

That is, in the blade 1 of the present embodiment, the outer skin 15 and the core material 16 are integrated.

Thereby, the blade 1 of the present embodiment exerts excellent strength.

In addition, the bending modulus of the beam core 16a and the expanded article 16c can be calculated in accordance with the method described in JIS K7221-1.

Specifically, the bending modulus can be measured under the environment of a temperature of 23 $\pm$ 2°C and a relative humidity of 50 $\pm$ 5%, after a rectangular parallelepiped shaped test piece of length 25 mm $\times$ width 130 mm $\times$ thickness 20 mm is cut out from the beam core 16a or the expanded article 16c, and this test piece is retained over 16 hours or longer under the environment of a temperature of 23 $\pm$ 2°C and a relative humidity of 50 $\pm$ 5%.

At that time, an interval between supporting points is 100 mm, a test speed is 10 mm/min, and a test jig tip is 5R (radius of curvature 5 mm).

For measurement, a testing machine which is commercially available from Orientec Co., Ltd. as a tensilon universal testing machine (product name "UCT-10T") can be used.

As data processing software, for example, one commercially available from Softbrain Co., Ltd. under a product name of "UTPS-237S" can be used.

In the acrylic resin expanded article, the bending modulus may not exhibit isotropy depending on a manufacturing method or the like.

In that case, the acrylic resin expanded article forming the above-described beam core 16a or the above-described expanded article 16c, which forms the above-described core material 16 is enough to exert the bending modulus of 5 MPa or more at least in one direction.

It is preferable that the above-described acrylic resin expanded article has a bending modulus of 5 MPa or more, in a direction in which the above-described blade bows by receiving wind (longitudinal direction of blade 1).

That is, it is preferable that the bending modulus obtained by collecting the above-described test piece so that a transverse direction thereof becomes a longitudinal direction of the blade 1 is 5 MPa or more.

Additionally, it is preferable that the above-described acrylic resin expanded article has also the bending modulus of 5 MPa or more, in a direction orthogonal to a bowing direction of the blade (width direction of blade 1).

It is preferable that the acrylic resin expanded article has a bending modulus of 5 MPa or more, in all directions.

In addition, an upper limit value of the bending modulus of the acrylic resin expanded article is usually 200 MPa.

The bending modulus of the acrylic resin expanded article in the present embodiment is more preferably 10 MPa or more and 150 MPa or less, and particularly preferably 10 MPa or more and 130 MPa or less.

It is preferable that the acrylic resin expanded article forming the above-described beam core 16a and the above-described expanded article 16c according to the present embodiment has a low apparent density for reducing weight of the windmill blade.

Specifically, the apparent density of the above-described acrylic resin expanded article is preferably less than 0.35 g/cm$^3$, and more preferably less than 0.25 g/cm$^3$.

On the other hand, it is preferable that the above-described acrylic resin expanded article according to the present embodiment has a high apparent density for enhancing strength of the windmill blade.

Specifically, it is preferable that the apparent density of the above-described acrylic resin expanded article exceeds 0.04 g/cm$^3$.

In addition, the apparent density can be measured by the following method.

That is, the apparent density can be obtained by cutting the above-described beam core 16a or the above-described expanded article 16c so that a cell shape and the like change as little as possible, to cut out a cube-shaped test piece of length 25 mm $\times$ width 25 mm $\times$ thickness 25 mm, conditioning the test piece for 16 hours under the environment of JIS K7100: 1999, Symbol 23/50, Class 2, thereafter, measuring the dimension and the mass of the test piece, and obtaining the apparent density by the following equation.

In addition, for measuring the dimension of the test piece, for example, "DIGIMATIC" Type CD-15 manufactured by Mitutoyo Corporation can be used.

$$\text{Apparent density (g/cm}^3) = 10^3 \times \text{test piece mass (g)/test piece volume (mm}^3)$$

The ratio (E/D) of the above-described bending modulus (E: MPa) to the apparent density (D: g/cm$^3$) can be handled as an index showing that the core material 16 has excellent strength, although it is lightweight.

In addition, the index is also named as "specific strength" or the like below.

The specific strength of the above-described core material 16 is preferably 200 or more, more preferably 250 or more, and particularly preferably 350 or more.

In addition, the core material 16 is preferably excellent in the specific strength, but does not need to have excessively high specific strength.

Additionally, when intending to obtain the core material 16 particularly excellent in the specific strength, a special monomer may be used as a starting raw material, or special manufacturing facilities may be used, when the acrylic resin expanded article is prepared.

For this reason, for making manufacturing of the core material 16 easy, the specific strength of the relevant core material 16 is preferably 2,000 or less, more preferably 1,500 or less, and particularly preferably 1,200 or less.

It is preferable that the above-described expanded article 16c has been prepared by cutting and processing an acrylic resin expanded article larger than the relevant expanded article 16c.

The acrylic resin expanded article is, usually, brought into the state where an entire surface is covered with a cell film, when it is in the state where it has been prepared by in-mold molding.

On the other hand, when such an acrylic resin expanded article is cut and processed, it becomes in the state where a number of cells are opened on a cut surface.

A surface of the above-described expanded article 16c exerts an excellent anchoring effect due to opened cells, when adhered with the outer skin 15.

That is, for example, when the above-described expanded article 16c is adhered to the outer skin 15 utilizing an adhering force of a matrix resin of a fiber-reinforced resin material forming the above-described outer skin 15, the above-described matrix resin can be flown into cells opening on a surface, and excellent adhesiveness can be exerted between the outer skin 15.

In addition, manifestation of such anchoring effect can also be exerted when the expanded article 16c and the outer skin 15 are adhered with a general adhesive without utilizing a matrix resin of a fiber-reinforced resin material.

In order to make the above-described expanded article 16c exert excellent strength, it is advantageous that the acrylic resin expanded article forming the above-described expanded article 16c has a small average cell diameter and is in the compact expanded state.

On the other hand, when an average cell diameter of the above-described expanded article 16c is excessively small, a matrix resin and an adhesive become difficult to flow into cells opening on a surface, and the above-described anchoring effect may become not to be sufficiently exerted.

From such a thing, it is preferable that the above-described expanded article 16c has an average cell diameter of the certain size or more.

Specifically, it is preferable that the average cell diameter of the above-described expanded article 16c is more than 0.7 mm and less than 1.5 mm.

Alternatively, it is preferable that the above-described expanded article 16c has a small average cell diameter, and contains coarse cells at the ratio to some degree or more.

Specifically, it is preferable that the above-described expanded article 16c has the average cell diameter of 0.1 mm or more and 0.7 mm or less, and when the above-described average cell diameter is expressed by "D (mm)", coarse cells having an opening area of "$2\pi D^2$ (mm$^2$)" or more exist on a surface thereof at the ratio of the cell number of 0.01/cm$^2$ or more and 1/cm$^2$ or less.

In addition, an average cell diameter of the expanded article 16c can be calculated as follows.

That is, the expanded article 16c is cut so that a cell shape and the like change as little as possible, to cut out a cube-shaped test piece of length 25 mm × width 25 mm × thickness 25 mm, and among eight squares of these rectangular parallelepiped shaped test pieces, one square is randomly selected, average cell diameters on three surfaces constituting this square are obtained, and the average cell diameters of these three surfaces are arithmetically averaged, thereby, an average cell diameter of the expanded article 16c can be obtained.

In addition, an average cell diameter of each surface can be obtained as follows.

First, a central part of each surface is magnified at 18 times and photographed using a scanning electron microscope ("S-3000N" manufactured by Hitachi, Ltd.), and images of photographed cross sections are printed on A4 paper.

Then, an arbitrary line segment (length 60 mm) is drawn at 6 places per each paper, and from the number of cells overlapping with this line segment, an average chord length for each line segment is calculated by the following equation.

The line segment is drawn so that cells are contacted only at a contact point as little as possible, and when contacted with a cell only at a contact point, this is included in the number of cells.

Average chord length (t) = length of line segment/(number of cells $\times$ magnification of photograph)

A cell diameter DL is calculated by following equation.

$$D_L = t/0.616$$

An arithmetic average value of a cell diameter (DL) obtained for each line segment is obtained, and this arithmetic average value is adopted as an average cell diameter of each surface.

Additionally, regarding the ratio of the above-described coarse cells, a region of a square having one side of 10 cm is randomly set on a surface of the expanded article 16c, and the number of coarse cells observed in this region is divided by an area (100 cm$^2$) of the region, thereby, the ratio can be obtained.

Furthermore, it is preferable that the above-described expanded article 16c has high closed cell rate from a view point of the strength.

On the other hand, in the expanded article 16c, when the closed cell rate is excessively high, even if tries to allow a matrix resin or an adhesive to flow into cells opening on a surface, there are little escape spaces of the air in the relevant cells, and the matrix resin or the adhesive becomes difficult to flow into cells.

Accordingly, it is preferable that the above-described expanded article 16c has the open cell rate to some extent.

Specifically, the open cell rate of the above-described expanded article 16c is preferably less than 50%, more preferably less than 45%, and particularly preferably less than 40%.

The open cell rate of the above-described expanded article 16c can be measured by the 1-1/2-1 air pressure method in accordance with ASTM D-2856-87.

In the expanded article 16c of the present embodiment, as shown in Fig. 3b, the thickness becomes small at both ends in a width direction of the windmill blade 1.

For this reason, the expanded article 16c not only becomes in the state where a matrix resin or an adhesive is easily permeated from a surface, to exert excellent anchoring effect, but also becomes excellent in the effect of reinforcing a thin portion, by containing open cells at the suitable ratio (for example, 10% or more) and, at the same time, containing coarse cells at the suitable ratio.

Additionally, in the expanded article 16c, for example, at a portion being thin like a left end in a front view of Fig. 3b, through holes penetrating the expanded article 16c in a thickness direction can be formed by the above-described open cells or the above-described coarse cells.

In that case, the outer skin adhered to one surface side (Fig. 3b upper side) of the above-described portion and the outer skin adhered to the other surface side (Fig. 3b lower side) can be connected with a matrix resin or an adhesive which has been flown into the above-described through holes, and high strength can be imparted to the windmill blade 1.

It is preferable that an acrylic resin forming the relevant expanded article 16c is a copolymer of an acrylic-based monomer and an aromatic vinyl monomer, in a point that the above-described preferable properties can be easily imparted to the expanded article 16c.

Examples of the above-described acrylic-based monomer include (meth)acrylic acid, methyl (meth)acrylate, ethyl (meth)acrylate, butyl (meth)acrylate, lauryl (meth)acrylate, 2-ethylhexyl (meth)acrylate, cyclohexyl (meth)acrylate, (meth)acrylamide, benzyl (meth)acrylate, maleic anhydride, maleic acid, fumaric acid, itaconic acid, itaconic anhydride, crotonic acid, maleic acid amide, maleic acid imide, and the like.

Examples of the aromatic vinyl monomer include styrene, methylstyrene, and the like.

Among them, it is preferable that the acrylic resin contains methyl methacrylate, (meth)acrylic acid, and styrene as a monomer unit, and optionally contains one or both of maleic anhydride and methacrylamide as the above-described monomer unit, and contains the monomer unit at the mass ratio shown in the following (A) to (E).

In addition, in the acrylic resin, the ratio of the monomer unit other than methyl methacrylate, (meth)acrylic acid, styrene, maleic anhydride, and methacrylamide is preferably 10% by mass or less, more preferably 5% by mass or less, and particularly preferably 1% by mass or less.

(A) Methyl methacrylate: 35 to 70% by mass
(B) (Meth)acrylic acid: 14 to 45% by mass
(C) Styrene: 10 to 20% by mass
(D) Maleic anhydride: 0 to 10% by mass
(E) Methacrylamide: 0 to 10% by mass

The above-described expanded article 16c can be, for example, an acrylic resin expanded article in which a polymer, obtained by polymerizing a polymerizable solution containing the above-described monomer at the above-described ratio with a polymerization initiator, has been expanded with a blowing agent.

In addition, a term of "(meth)acryl" in the present specification is used in a sense of both of "acryl" and "methacryl".

Accordingly, the requirement of "(meth)acrylic acid: 14 to 45% by mass" includes three cases of the "case where both of acrylic acid and methacrylic acid are contained, and the total content is 14 to 45% by mass", the "case where methacrylic acid is not contained, and the content of acrylic acid is 14 to 45% by mass", and the "case where acrylic acid is not contained, and the content of methacrylic acid is 14 to 45% by mass".

Examples of the above-described polymerization initiator include a redox-based polymerization initiator such as t-butyl hydroperoxide.

Examples of the above-described blowing agent include a thermal degradation-type blowing agent such as urea.

Additionally, for forming an acrylic resin expanded article, a plasticizing agent, a dehydrating agent, a reducing agent, and the like can be appropriately contained in the above-described polymerizable solution.

By containing the above-described monomer unit, the above-described expanded article 16c not only can make an acrylic resin itself have high strength, but also easily makes the relevant acrylic resin in the compact expanded state.

Additionally, by containing 0.5 to 2% by mass of water in addition to the above-described monomer in a polymerizable solution for forming the above-described polymer, the above-described expanded article 16c can form open cells and coarse cells at the suitable ratio upon expansion of the above-described polymer.

By containing the above-described components, the expanded article 16c of the present embodiment exhibits high bending modulus, even when expanded at such high expansion ratio that the apparent density becomes sufficiently small.

Additionally, by containing the above-described components, in the expanded article 16c of the present embodiment, various properties such as an average cell diameter, the ratio of coarse cells, and the open cell rate are easily adjusted.

By disposing the above-described beam body together with such expanded article 16c in the internal space S of the whip portion 12, rigidity in a longitudinal direction of the blade 1 can be enhanced, and at the same time, the weight thereof can be reduced.

Furthermore, by covering a surface of the beam core 16a with the beam outer skin 16b, the beam body can be fixed at a more precise position of the internal space S, and at the same time, the bending rigidity of the beam body can be enhanced.

Furthermore, by continuously arranging the core body 18 of the attaching portion 11 and the beam body along a longitudinal direction of the blade 1, rigidity in a longitudinal direction of the blade 1 can be enhanced.

3. Structure of Outer Skin

As shown in Fig. 5, the outer skin 15 has a laminated structure of three layers (plural) composed of a fiber-reinforced resin material, in a thickness direction of the outer skin 15.

At the above-described attaching portion 11 and the above-described whip portion 12, the above-described outer skin has a laminated structure by a plurality of the above-described fiber-reinforced resin materials, and is provided with a plurality of fiber-reinforced resin layers in a thickness direction of the outer skin.

The fiber-reinforced resin material may contain a reinforcing fiber in the short fiber state, and preferably contains a reinforcing fiber as a sheet woven with a continuous fiber.

The sheet composed of the reinforcing fiber can be, for example, a plain weave fabric, a twill weave fabric, a satin weave fabric or the like, which is composed of the above-described continuous fiber.

The blade 1 of the present embodiment is provided with an outer skin 15 of a three-layer structure in which, in order from a surface layer, a first fiber-reinforced resin layer 15A, a second fiber-reinforced resin layer 15B, and a third fiber-reinforced resin layer 15C are laminated.

The first fiber-reinforced resin layer 15A positioned on an outer wall surface 12b side of the whip portion 12 is such that a fiber sheet having the lowest fiber density has been impregnated with a thermosetting resin.

The second fiber-reinforced resin layer 15B which is positioned on a more inner wall surface 12a side than the first fiber-reinforced resin layer 15A and is contacted with the above-described first fiber-reinforced resin layer 15A from the inner side, and the third fiber-reinforced resin layer 15C which is contacted with the second fiber-reinforced resin layer 15B from the inner side are such that a fiber sheet having a fiber density higher than that of the first fiber-reinforced resin layer 15A has been impregnated with the above-described thermosetting resin.

That is, the mass ratio of the fiber in the first fiber-reinforced resin layer 15A is lower than the mass ratio of the fiber of the second fiber-reinforced resin layer 15B and that of the third fiber-reinforced resin layer 15C.

In other words, the density of the fiber of the third fiber-reinforced resin layer 15C on the innermost wall surface side of the outer skin at the above-described whip portion and the above-described attaching portion is higher, as compared with the density of the fiber of the first fiber-reinforced resin layer 15A on the outer wall surface side.

Herein, "the mass ratio of the fiber" in the present specification means "the mass of the fiber contained per unit volume of a fiber-reinforced resin layer".

Generally, the density of the fiber for reinforcement is higher than that of a matrix resin.

Then, by possession of the above-described relationship regarding the ratio of the fiber by fiber-reinforced resin layers 15A, 15B, and 15C, the fiber-reinforced resin layer (layer on outer wall surface side) 15A positioned remote from a shaft line of the blade 1 can be reduced in weight more than the fiber-reinforced resin layers (layers on inner wall surface side) 15B and 15C positioned nearer the shaft line.

Thereby, vibration during rotation of the blade 1 can be reduced.

In addition, based on the same reason and the like, it is preferable that the above-described beam outer skin 16b is formed of a fiber-reinforced resin material high in mass ratio of the fiber than that of the third fiber-reinforced resin layer 15C on an inner wall surface side of the above-described outer skin.

Additionally, it is preferable that the above-described beam outer skin 16b has also great mass ratio of the fiber for making the beam body to have high strength.

In order that the above-described relationship concerning the mass ratio of the fiber is exerted between the fiber-reinforced resin layers, not only the mass ratio of the fiber of each layer may be simply made to be different, but also a material of the fiber may be made to be different.

In the present embodiment, all fiber-reinforced resin materials of the first fiber-reinforced resin layer 15A, the second fiber-reinforced resin layer 15B, and the third fiber-reinforced resin layer 15C can be made to contain a carbon fiber as a reinforcing fiber.

Additionally, in the present embodiment, any one or two of the first fiber-reinforced resin layer 15A, the second fiber-reinforced resin layer 15B, and the third fiber-reinforced resin layer 15C can be formed of a fiber-reinforced resin material in which a reinforcing fiber other than a carbon fiber is used.

For example, in the present embodiment, the first fiber-reinforced resin layer 15A can be formed of a fiber-reinforced resin material in which a carbon fiber is used as a reinforcing fiber (CFRP), and the second fiber-reinforced resin layer 15B and the third fiber-reinforced resin layer 15C can be a fiber-reinforced resin material in which a glass fiber is used (GFRP).

In addition, generally, the glass fiber-reinforced resin material (GFRP) has a density higher than a density of the carbon fiber-reinforced resin material (CFRP).

For this reason, in the outer skin 15 of the above-described blade 1, disposition of GFRP on a more inner side than CFRP becomes advantageous for reducing the energy necessary for rotation of the windmill.

Additionally, based on the same reason, in the outer skin 15 of the above-described blade 1, it is preferable that the length of GFRP from a proximal end 12d of the whip portion 12 is shorter than that of CFRP.

In addition, on an outer wall surface 12b of the outer skin 15, a coating layer of a resin or the like (not shown) is further formed.

Meanwhile, at the throttle portion 13 of the whip portion 12, a bending stress is generated along a longitudinal direction of the blade 1 during rotation.

In such case, since the greater force is applied on an outer wall surface 12b side as compared with on an inner wall surface side of the outer skin 15, usually, it is effective that reinforcement is performed to enhance the strength of the outer wall surface side.

However, when such reinforcement is performed, the mass changes toward a direction of increasing the weight of the outer wall surface side of the outer skin.

Then, in the present embodiment, a reinforcing material 17 as shown below is provided.

4. Structure of Reinforcing Material

The above-described reinforcing material 17, in the present embodiment, is provided for reinforcing a junction between the throttle portion 13 and the above-described attaching portion 11.

The above-described reinforcing material 17 is formed of a fiber-reinforced resin material having a mass ratio of the fiber higher than that of the third fiber-reinforced resin layer 15C on an inner wall surface side of the above-described outer skin 15, and is adhered to an inner wall surface of the above-described outer skin 15 so as to lay over from the above-described throttle portion 13 to the above-described attaching portion 11.

Specifically, the reinforcing material 17 is such that a woven fabric-like reinforcing fiber sheet is impregnated with the same thermosetting resin as that of the matrix resin of the outer skin 15.

In this way, by providing the reinforcing material 17 composed of a fiber-reinforced resin material over an inner wall surface 12a of the outer skin 15 of the whip portion 12 and an inner wall surface 11a of the outer skin 15 of the attaching portion 11, even if stress concentration is generated at the throttle portion 13 upon use of the blade 1, the strength of the blade 1 can be secured by the reinforcing material 17.

Furthermore, in the blade 1, since the reinforcing material 17 is provided on inner wall surfaces 11a, 12a of the outer skin 15, vibration during rotation is hardly generated.

Furthermore, on an inner wall surface 12a side of the outer skin 15 forming the throttle portion 13, the reinforcing material 17 having the thickness in response to the desired strength can be formed.

Additionally, since the reinforcing material 17 has a mass ratio of the fiber higher than that of the outer skin 15, the throttle portion 13 can be reinforced at the smaller layer thickness.

Herein, the reinforcing material 17 has a laminated structure in which four (plural) fiber-reinforced resin material layers for reinforcement 17A, 17B, 17C, and 17D are laminated in a thickness direction of the outer skin 15 so as to cover the inner wall surface 12a of the outer skin 15 at the whip portion 12 and the inner wall surface 11a of the outer skin 15 at the attaching portion 11.

It is preferable that four fiber-reinforced resin material layers for reinforcement 17A, 17B, 17C, and 17D are laminated so that a position of an end on a tip side of the whip portion 12 of each fiber-reinforced resin material layer for reinforcement is sequentially shifted from a tip 12c side of the whip portion 12 to a proximal end 12d side of the whip portion 12 toward a thickness direction of the reinforcing material 17.

That is, it is preferable that, in the above-described reinforcing material, a position of an end on a tip side of the whip portion of each fiber-reinforced resin layer for reinforcement retreats to the above-described attaching portion side as advancing to the inner wall surface of the above-described outer skin, or a position of an end on a tip side of the whip portion of each fiber-reinforced resin layer for reinforcement retreats to the above-described attaching portion side as departing from the inner wall surface of the above-described outer skin.

Four fiber-reinforced resin material layers for reinforcement 17A, 17B, 17C, and 17D in the present embodiment are laminated so that as advancing toward the inner wall surface 12a of the outer skin 15 of the whip portion 12, a position of an end on a tip 12c side of the whip portion 12 of each fiber-reinforced resin material layer for reinforcement is sequentially shifted (in order of 17D to 17A) from a tip 12c side of the whip portion 12 to a proximal end 12d side of the whip portion.

In the present embodiment, since four fiber-reinforced resin material layers for reinforcement 17A, 17B, 17C, and 17D are laminated so that the position is sequentially shifted from a tip 12c side of the whip portion 12 to a proximal end 12d side of the whip portion 12, the thickness of the reinforcing material 17 on a tip 12c side of the whip portion 12 is smaller than the thickness of the reinforcing material 17 on a proximal end 12d side of the whip portion 12.

Thereby, a centroid position of the blade 1 due to provision of the reinforcing material 17 can be located on a proximal end side of the whip portion 12, and a centrifugal force acting on the blade (throttle portion 13 of whip portion) can be decreased during rotation.

Particularly, in the blade 1 of the present embodiment, since a fiber-reinforced resin material layer for reinforcement having a greater area is arranged at a position remote from a shaft line thereof, vibration during rotation can be decreased.

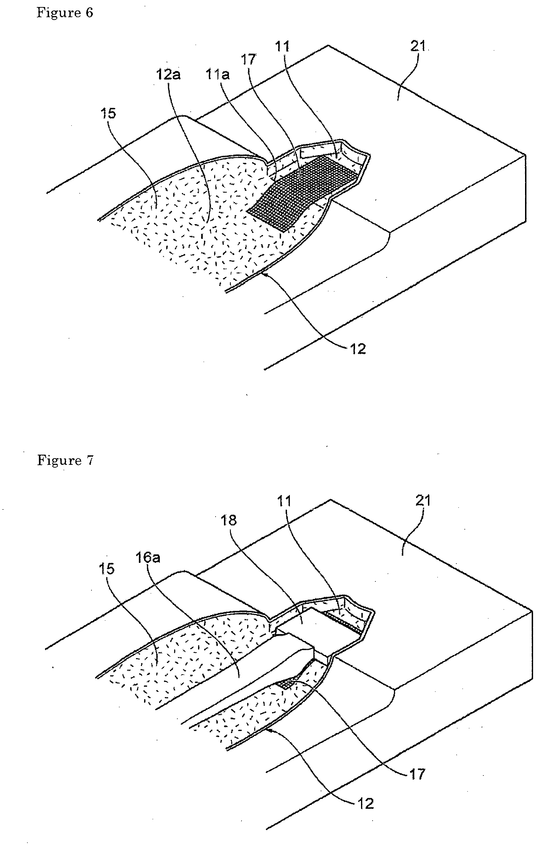

Particularly, as shown in Fig. 7 described later, when the beam body is arranged during manufacturing, a contact area between the reinforcing material 17 and the beam body (core material 16) can be more increased, and the beam body can be stably fixed in the internal space S.

5. Method for Manufacturing Windmill Blade

A method for manufacturing the windmill blade 1 will be illustrated below.

Fig. 6 is a schematic perspective for illustrating the state during manufacturing where a reinforcing material is arranged on an inner wall surface of an outer skin in the halved state.

Fig. 7 is a schematic perspective for illustrating the state during manufacturing where a beam body of a beam material is arranged on a reinforcing material.

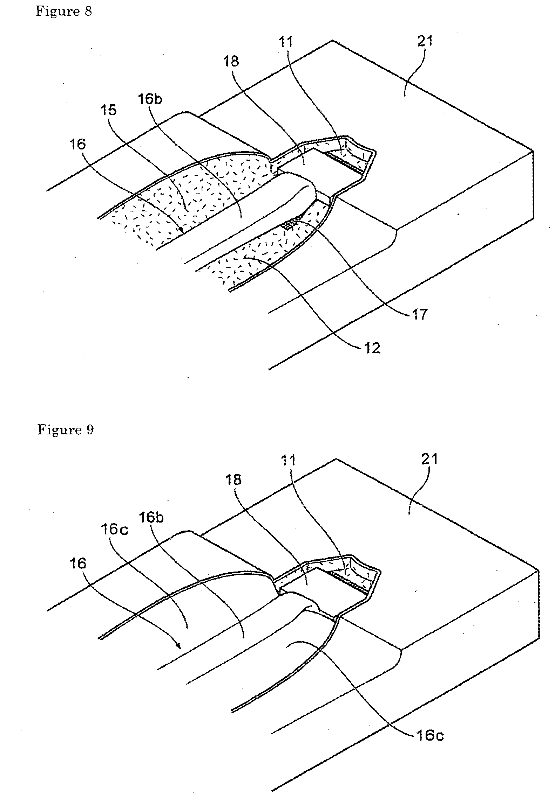

Fig. 8 is a schematic perspective for illustrating the state during manufacturing where a surface of a beam core 16a is covered with a fiber-reinforced resin material (beam outer skin 16b).

Fig. 9 is a schematic perspective for illustrating the state where an expanded article 16c forming a core material 16 together with a beam body is further disposed.

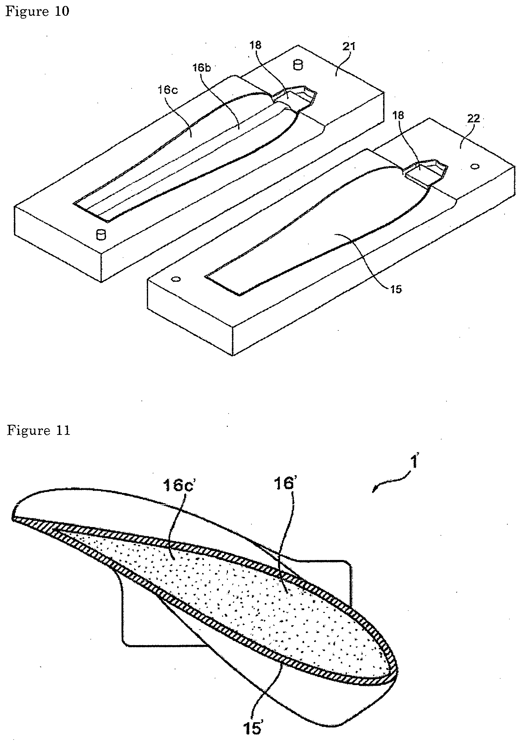

Fig. 10 is a schematic perspective for showing the state before preparation of a windmill blade by mutually sticking outer skins in the halved state.

In the present embodiment, prior to preparation of a windmill blade 1, an acrylic resin expanded article which is to be a material for forming an expanded article 16c is prepared.

Herein, first, a polymerizable solution containing an acrylic-based monomer, a polymerization initiator, a blowing agent (urea), a reducing agent, and the like is prepared.

More specifically, a polymerizable solution containing methyl methacrylate, (meth)acrylic acid, and styrene, and if necessary, containing one or both of maleic anhydride and methacrylamide, in which the ratio of each monomer to all monomers is the following (A) to (E), and a polymerizable monomer other than the following (A) to (E) is not substantially contained (for example, less than 1% by mass) is prepared.

> (A) Methyl methacrylate: 35 to 70% by mass
> (B) (Meth)acrylic acid: 14 to 45% by mass
> (C) Styrene: 10 to 20% by mass
> (D) Maleic anhydride: 0 to 10% by mass
> (E) Methacrylamide: 0 to 10% by mass

Then, the polymerizable solution is heated at a temperature of lower than a thermal degradation temperature of urea, to polymerize the monomers to obtain a polymer.

This polymer is heated to a temperature of not lower than a thermal degradation temperature of urea to expand to prepare an acrylic resin expanded article.

By this, in an acrylic resin forming the acrylic resin expanded article, monomer units shown in (A) to (E) become a total of 99% by mass or more, and the resin exerts excellent strength.

At that time, by making the polymer before expansion contain, for example, water at about 0.5 to 2.0% by mass, or adjusting the dispersed state of urea by the content of methacrylic acid having high dissolving power on urea, coarse cells can be moderately formed in the acrylic resin expanded article.

The above-described expanded article 16c or the above-described beam core 16a can be prepared by subjecting this acrylic resin expanded article to cutting-processing.

In order to prepare the windmill blade 1 using this expanded article 16c, a pair of mold dies 21, 22 corresponding to a shape of the blade 1 are prepared (for example, see Fig. 10).

First, a liquid or gel-like coating material is coated on a molding surface of the pair of mold dies, and spread with a roller so that the air does not enter the molding surface.

Then, as shown in Fig. 6, an outer skin 15 is molded on the mold die 21 on one side, and thereafter, a reinforcing material 17 is molded.

In the present embodiment, as one example thereof, the outer skin 15 and the reinforcing material 17 are molded by a hand lay-up molding method.

Specifically, in order to form a fiber-reinforced resin material constituting a first fiber-reinforced resin layer 15A (see Fig. 5), a reinforcing fiber sheet is arranged in the mold die 21, and this reinforcing fiber sheet is impregnated with a thermosetting resin which is to be a matrix resin.

Furthermore, reinforcing fiber sheets for forming a second fiber-reinforced resin layer 15B and a third fiber-reinforced resin layer 15C are arranged thereon, and a step of impregnating the thermosetting resin is repeated two times in a similar manner.

The same work is also conducted on the mold die 22 on the other side (see Fig. 10 described later).

In addition, in the present embodiment, a cold curing-type thermosetting resin which cures at an ambient temperature is used as a thermosetting resin for forming a fiber-reinforced resin layer.

If a resin is cured during molding, a heat curing-type resin may be used without particularly using the cold curing-type thermosetting resin.

Furthermore, a reinforcing fiber sheet (for example, glass fiber sheet of plain weave having a fiber density of 580 g/m$^2$) is arranged over inner surfaces of an inner wall surface 12a of the outer skin 15 of the whip portion 12 and an inner wall surface 11a of the outer skin 15 of the attaching portion 11, and a step of impregnating the thermosetting resin into the reinforcing fiber sheet by the same method is repeated four times.

Thereupon, woven fabric-like reinforcing fiber sheets are arranged so that they are sequentially shifted toward a tip 12c side of the whip portion 12.

In this way, a reinforcing material 17 in which four fiber-reinforced resin material layers for reinforcement are laminated can be formed (see Fig. 5).

In addition, in the present embodiment, the outer skin 15 and the reinforcing material 17 were impregnated with the thermosetting resin every time when each layer of the reinforcing fiber sheet was spread, but if the air hardly remains in the reinforcing fiber sheets, the thermosetting resin may be impregnated after lamination of the reinforcing fiber sheets.

Then, as shown in Fig. 7, a beam core 16a is arranged from a tip 12c of the whip portion 12 to a proximal end 12d of the whip portion 12 along a longitudinal direction of the whip portion 12.

A core body 18 in the halved state is arranged in a concave portion corresponding to an internal space of the attaching portion 11.

Thereafter, as shown in Fig. 8, the reinforcing fiber sheets are arranged so as to cover the beam core 16a, and a step of impregnating the thermosetting resin is repeated two times.

Thereby, a beam body covered with a beam outer skin 16b composed of a fiber-reinforced resin material is prepared.

The above-described expanded article 16c is filled into an internal space S of the whip portion 12 other than the beam body.

Finally, as shown in Fig. 9, an adhesive is coated on a joint portion (edge portion) between outer skins 15, 15 which are formed in mold dies 21, 22, a contact surface between the beam body or the expanded article 16c and the outer skin 15, and a surface on which core bodies 18 are mutually contacted, the mold dies 21, 22 are confronted, and outer skins 15, 15 are adhered while press-bonding.

Thereby, the windmill blade 1 shown in Fig. 1 is molded.

The embodiment of the present invention has been described in detail above, but specific configuration is not limited to this embodiment and working example, but even when there is design change in such a range that the change is not departed from the gist of the present invention, they are included in the present invention.

In the present embodiment, four fiber-reinforced resin material layers for reinforcement are laminated so that as advancing to the inner wall surface of the outer skin of the whip portion, a position of an end on a tip side of the whip portion of each fiber-reinforced resin material layer for reinforcement is sequentially shifted from a tip side of the whip portion to a proximal end side of the whip portion, but for example, as advancing to the inner wall surface of the outer skin of the whip portion, a position of an end of each fiber-reinforced resin material layer may be sequentially shifted from a proximal end side of the whip portion to a tip side of the whip portion.

Additionally, in the present embodiment, the outer skin was three-layered and the fiber-reinforced resin material layer for reinforcement of the reinforcing material was four-layered, but the windmill blade of the present invention is not particularly limited to these layer numbers and shapes.

Additionally, in the present embodiment, the windmill blade having the beam body has been exemplified, but in the windmill blade of the present invention, the beam body need not exist.

That is, in the windmill blade of the present invention, a part of the core material may be formed of the acrylic resin expanded article, or the entirety of the core material may be formed of the acrylic resin expanded article.

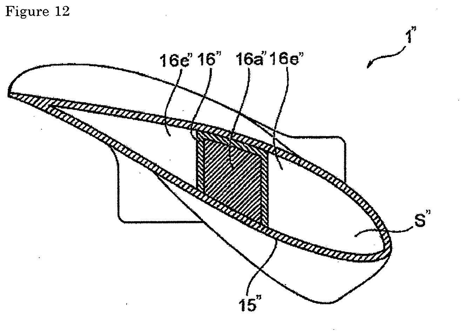

Specifically, the windmill blade of the present invention may be one shown in Fig. 11, Fig. 12 or the like.

In addition, Figs. 11 and 12 are a cross-sectional view corresponding to Fig. 3b.

As shown in Fig. 11, in the windmill blade 1' of the present invention, a core material 16' may be formed of an acrylic resin expanded article 16c' to be filled inside an outer skin 15'.

Furthermore, it is not necessary that the core material of the windmill blade of the present invention is filled into the outer skin, for example, as shown in Fig. 12.

That is, in the windmill blade 1" of the present invention, a cavity portion 16e" in which there is no member such as the expanded article may be formed in an internal space S" of the whip portion.

Specifically, in the windmill blade 1", for example, a part other than the beam body having a beam core 16a" formed of the acrylic resin expanded article may be a cavity portion 16e".

That is, as shown in Fig. 12, a core material 16" may only be the beam body.

Additional, in the present invention, in addition to the above-described exemplification, the previously known technical matters related to the windmill blade, the fiber-reinforced resin material, and the acrylic resin expanded article can be appropriately adopted.

DESCRIPTION OF THE REFERENCE NUMERALS

1: Windmill blade; 11: Attaching portion; 11a: Inner wall surface of attaching portion; 19: Through hole; 12: Whip portion; 12a: Inner wall surface of whip portion; 12b: Outer wall surface of whip portion; 12c: Tip of whip portion; 12d: Proximal end of whip portion; 13: Throttle portion; 15: Outer skin; 16: Core material; 16a: Beam core (acrylic resin expanded article); 16b: Beam outer skin; 16c: Expanded article (acrylic resin expanded article); 17: Reinforcing material; 17A, 17B, 17C, 17D: Fiber-reinforced resin material layer for reinforcement; S: Internal space.

**Claims**

1. A windmill blade comprising a core material and an outer skin covering said core material, wherein
   said outer skin is formed of a fiber-reinforced resin material comprising a carbon fiber and a resin,
   at least a part of said core material is formed of an acrylic resin expanded article, and
   said acrylic resin expanded article has a bending modulus of 5 MPa or more.

2. The windmill blade according to claim 1, wherein
   a monomer unit of an acrylic resin for forming said acrylic resin expanded article comprises:

   methyl methacrylate, (meth)acrylic acid, and styrene as essential components, and

maleic anhydride and methacrylamide as arbitrary components, and
said acrylic resin comprises said monomer unit at a ratio shown in ratio (A) to (E) below:

(A) methyl methacrylate: 35 to 70% by mass,
(B) (meth)acrylic acid: 14 to 45% by mass,
(C) styrene: 10 to 20% by mass,
(D) maleic anhydride: 0 to 10% by mass, and
(E) methacrylamide: 0 to 10% by mass.

3. The windmill blade according to claim 1 or 2, comprising an attaching portion attached to a shaft of a windmill and a whip portion extending from said attaching portion, wherein
in said whip portion and said attaching portion, said outer skin has a laminated structure and includes a plurality of fiber-reinforced resin layers by a plurality of fiber-reinforced resin materials which are laminated in a thickness direction of said outer skin, and
in said outer skin at said whip portion and said attaching portion, a mass ratio of a fiber contained in said fiber-reinforced resin layer on an inner wall surface side is higher as compared with a mass ratio of a fiber contained in said fiber-reinforced resin layer on an outer wall surface side.

4. The windmill blade according to claim 3, wherein
said whip portion comprises a throttle portion in which as advancing to said attaching portion side, a width and a thickness of said whip portion are decreased at a boundary portion with said attaching portion,
a joint portion between said throttle portion and said attaching portion comprises a reinforcing material, and
said reinforcing material is formed of a fiber-reinforced resin material high in mass ratio of the fiber than that of said fiber-reinforced resin layer on the inner surface side of said outer skin, and said reinforcing material is adhered to an inner wall surface of said outer skin so as to lay over from said throttle portion to said attaching portion.

5. The windmill blade according to claim 4, wherein
said reinforcing material comprises a plurality of fiber-reinforced resin layers for reinforcement which are laminated in a thickness direction,
said fiber-reinforced resin layer for reinforcement is formed of a fiber-reinforced resin material comprising a fiber and a resin, and
a position of an end on a tip side of a whip portion of each fiber-reinforced resin layer for reinforcement retreats to said attaching portion side, as advancing toward an inner wall surface of said outer skin.

6. The windmill blade according to claim 4, wherein
said reinforcing material comprises a plurality of fiber-reinforced resin layers for reinforcement which are laminated in a thickness direction,
said fiber-reinforced resin layer for reinforcement is formed of a fiber-reinforced resin material comprising a fiber and a resin, and
a position of an end on a tip side of a whip portion of each fiber-reinforced resin layer for reinforcement retreats to said attaching portion side, as departing from an inner wall surface of said outer skin.

7. The windmill blade according to any one of claims 3 to 6, wherein
said core material comprises a bar-like beam body extending from said attaching portion toward a tip of said whip portion,
said whip portion includes said acrylic resin expanded article in a space other than a space occupied by said beam body among an internal space surrounded with said outer skin,
said beam body comprises a beam core thinner than said beam body and a beam outer skin covering said beam core, and
said beam outer skin is formed of a fiber-reinforced resin material high in mass ratio of the fiber than that of the fiber-reinforced resin layer on the inner surface side of said outer skin.

8. The windmill blade according to claim 7, wherein said beam core is formed of an acrylic resin expanded article having a bending modulus of 5 MPa or more.

Figure 1

Figure 2a

Figure 2b

Figure 3a

Figure 3b

Figure 4

Figure 5

Figure 6

Figure 7

Figure 8

Figure 9

Figure 10

Figure 11

Figure 12

## INTERNATIONAL SEARCH REPORT

International application No.

PCT/JP2015/075131

### A. CLASSIFICATION OF SUBJECT MATTER
F03D11/00(2006.01)i

According to International Patent Classification (IPC) or to both national classification and IPC

### B. FIELDS SEARCHED

Minimum documentation searched (classification system followed by classification symbols)
F03D11/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | WO 2006/106734 A1 (Zephyr Corp.),<br>12 October 2006 (12.10.2006),<br>paragraphs [0030] to [0043]; fig. 1 to 10<br>& US 2008/0273981 A1<br>paragraphs [0057] to [0070]; fig. 1 to 10 | 1,3-8<br>2 |
| Y | JP 2006-161669 A (Toray Industries, Inc.),<br>22 June 2006 (22.06.2006),<br>paragraphs [0022] to [0035]<br>(Family: none) | 1,3-8 |
| Y | US 2014/0178204 A1 (GENERAL ELECTRIC CO.),<br>26 June 2014 (26.06.2014),<br>paragraphs [0021] to [0024]; fig. 1 to 3<br>(Family: none) | 3-8 |

[×] Further documents are listed in the continuation of Box C.　　[ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>　　20 November 2015 (20.11.15) | Date of mailing of the international search report<br>　　01 December 2015 (01.12.15) |
|---|---|
| Name and mailing address of the ISA/<br>　　Japan Patent Office<br>　　3-4-3,Kasumigaseki,Chiyoda-ku,<br>　　Tokyo 100-8915,Japan | Authorized officer<br><br><br>Telephone No. |

Form PCT/ISA/210 (second sheet) (July 2009)

**INTERNATIONAL SEARCH REPORT**

International application No.

PCT/JP2015/075131

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-510866 A  (Epsilon Composite),<br>01 May 2014 (01.05.2014),<br>paragraphs [0029] to [0052]; fig. 1 to 4<br>& US 2014/0003956 A1<br>paragraphs [0032] to [0054]; fig. 1 to 4 | 5-8 |
| Y | WO 2011/077545 A1  (Mitsubishi Heavy Industries, Ltd.),<br>30 June 2011 (30.06.2011),<br>paragraphs [0036] to [0039]; fig. 5<br>& US 2012/0141282 A1<br>paragraphs [0102] to [0109]; fig. 5 | 7-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002137307 A